# EUROPEAN PATENT APPLICATION

(11) **EP 2 156 914 A1**
(43) Date of publication of application: **24.02.2010**
(21) Application number: 08014700.2
(22) Date of filing: 19.08.2008
(51) Int. Cl.: B23D 47/04, B27B 5/065, B23D 59/00, G05B 19/408

(54) **A control system and associated method for cutting**

(71) Applicant: De Lille, Arnout, 9990 Maldegem (BE); De Lille, Bern, 9990 Maldegem (BE)
(72) Inventor: De Lille, Arnout, 9990 Maldegem (BE); De Lille, Bern, 9990 Maldegem (BE)
(74) Representative: BiiP cvba

(57) **Abstract**

The present invention relates to a system for controlling the cutting of a first rip out of a first board and a second rip out of the first board or out of a second board. The system comprising a control module which comprises means for providing an instruction to stack and/or align the first board and the second board or the first rip and the second rip and means for providing an instruction to process the first rip and the second rip simultaneously.

## Description

### Field of the Invention

The present invention generally relates to cutting of materials and in particular to control systems for cutting such materials and cutting methods to individual, related or multi layer components as finished product or temporary formats or further to be processed elements.

### Background of the Invention

Various objects are created out of multiple elements which each are created in a specific way. For instance furniture such as cupboards, closets, tables, etc are made up out of a number of wooden panels, legs or other floor supports, some elements are tiny, some large and small etc. Each wooden panel is created using a cutting process which requires one or more cuttings of a wooden board, single or stacked. Similarly metal objects such as containers may also be made up out of a number of metal panels which are welded or bolted together. Such metal panels can be cut from a larger metal sheet, plate or board using a guillotine shear, saw specifically designed to cut metal or can be obtained by cutting the boards, sheets or plates with a laser, high pressure water jets, shear, etc. Similarly glass can be cut into pieces which can serve as a window in a cupboard, mirror, a door. In general, various elements making up an object can be obtained from a cutting process or a process involving cutting and further processing using tools such as drills, milling machines, CNC machines, knifes, guillotine shears etc.

Each step, be it cutting or further processing, requires a certain amount of time to complete. Unprocessed boards have to be retrieved from storage to be fed to the cutting machines, parts cut from a board have to be provided to the machine responsible for the further processing, waste and unused parts have to be stored, etc. The longer it takes for each step to complete, the more expensive a production gets. A first step towards reducing the amount of time is to have machines which are able to perform certain functions automatically. For instance, instead of having an operator enter each cut manually at the time of performing the cut, the cutting machine may be able to process a complete cutting plan which details all the parts that have to be cut from the board.

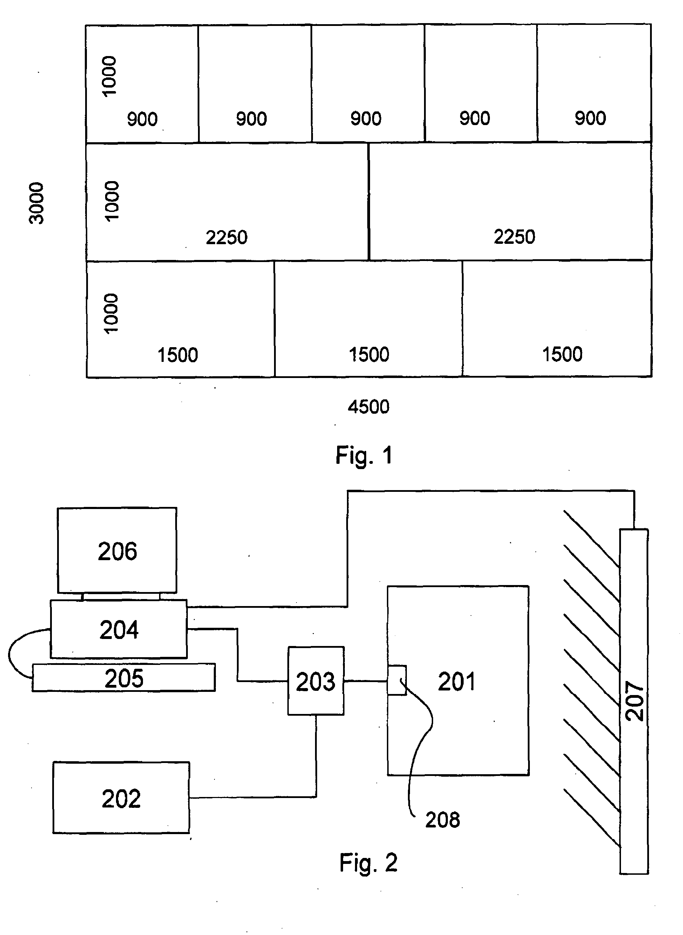

For example, consider a wooden board which has dimensions of 3000mm x 4500mm and which is illustrated by Fig. 1. For a certain product, the board has to be cut into three equal parts of 1000mm x 1500mm, two equal parts of 1000mm x 2250mm and five equal parts of 1000mm x 900mm wide. To achieve this result, an efficient way would be to cut the board into three rips of 1000mm x 4500mm and then divide each of the rips in the three, two or five equal parts respectively. This means that two cuts are needed to create the three rips, two cuts for the three equal parts, one cut for the two equal parts and four cuts for the five equal parts which totals to nine cuts. In this example we neglected trim cuts and cutting thickness. If the original board is larger than 3000mm x 4500mm, additional cuts may be needed to reduce the original board to the appropriate size.

In certain existing solutions, an operator would have to specify each cut when feeding a board or rip to the machine. In other words, the operator would place the board of 3000mm x 4500mm on the machine and use the control panel of the machine to enter the dimensions where each cut has to be made. Then the operator would feed the first rip and enter the dimensions for each part of that rip, etc. Alternatively a complete layout of the board and the pieces that have to be cut from the board can be entered into the machine, for instance by an operator prior to starting the cutting process or automatically when the cutting machine supports computer aided manufacturing or is equipped with a processor to handle such layouts. In such case, an operator's interaction may be limited to feed boards and rips and retrieving rips and pieces from the machine. We refer to this solution as machines provided by Pattern Cutting programming. The latter solution is available on various existing machines and can lead to a reduction in time when cutting rips and parts from a board. In addition to reducing the time, the latter solution also reduces the chances of errors. When an operator has to enter the dimensions for each cut manually, he may enter incorrect values which results in cuts that are unneeded and thus additional waste or excessive material. The automated cutting machines are designed to take a cutting layout and process the layout hierarchically on a level-by-level basis. This means that the existing cutting machines can take a board which is cut into rips which form the first level and each rip is further processed into smaller parts which forms a second level and these smaller parts can be processed even further in a third and subsequent levels. In a typical setup, a board enters the cutting device and rips are obtained from the cutting device, then each rip is in turn cut into smaller parts which in turn can also be further processed. Various embodiments exists wherein the first rip that is obtained is fed back into the machine for further processing or wherein the last rip is fed back into the machine first for further processing. When angular beam saws are used, which are saws with two cutting axis positioned under an angle from each other, it is possible to invert a layout in order to combine the last rip from the first stack with the first rip from the second stack. However, this is only done for identical rips and a need for an identical further processing of such rips. In addition, an angular beam saw is a more complex cutting device which can cut a rip via the first saw on the first axis and then process a rip immediately thereafter using the second saw on the second axis.

Each cut requires a certain time to complete as the board or rip has to be fed into the cutting machine, the cuts have to be made and the result has to be removed from the machine. In addition, any waste or unused material has to be recovered and be disposed of or stored. For this example it is assumed that each cut takes 15 seconds and that adding a board or rip to the machine and removing the parts takes 30 seconds for each board or rip. In the above example that results 135 seconds of cutting time for nine cuts, 30 seconds to feed the board and retrieve the rips, 30 seconds to feed the first rip and retrieve the three equal parts, 30 seconds to feed the second rip and retrieve the two equal parts and 30 seconds to feed the third rip and recover the five equal parts which in total is 255 seconds for processing the board into the required pieces. If a second board has to be turned into exactly the same parts as in the above example, it could take up to twice as long when each of the boards is cut individually.

In summary, existing solutions require a certain amount of time to process boards, rips or parts. It is desirable to keep the amount of time limited in order to have a high production rate, which is cost efficient for a production facility and means that more final products can be realized in the same time frame.

In addition to a time requirement, the cutting of materials also imposes problems on the processing equipment such as saws, lasers, etc. A saw is a way of physically dividing a piece of material in two pieces by brute force. Saws spinning at high speed rip through the material and remove a bit of material between the two pieces. Although a saw is much stronger than the material itself, there is always some wear on the saw blade. This is especially the case when cutting hard materials such as stones or metal plates or sheets. Other cutting techniques such as a laser are less prone to the effects of wear because there is no physical contact between the material that is cut and the cutting device or there is no tearing apart of the material. However materials such as lasers, water-jet based systems, etc. require a significant amount of power in order to operate. Consequentially, reducing the number of cuts while cutting a material in pieces does not only reduce the time requirement in order to obtain the required pieces, it can also reduce the costs for repairing or replacing worn down equipment and the power consumption.

Another element in the production process of pieces via cutting processes is waste management. The above given example was based on a board which has a dimension that perfectly fits the needs of the finished pieces. However, if the initial board had a dimension of 4000mm x 6000mm, additional cuts would be necessary to reduce the board to 3000mm x 4500mm. These additional cuts may result in a piece of 1000mm x 6000mm and a piece of 3000mm x 1500mm or a piece of 1000mm x 4500mm and a piece of 4000mm x 1500mm. Either way, these two pieces would not be used in this example and are therefore considered as excess. The excess material can be used for future layouts which are made out of the same material and require rips and pieces which can be obtained from the excess material. However, if the excess material is too small, it is considered waste and can be In view of the present invention, excess material is any material that is left over from cutting a board, rip or part which can be used at a later point in time and waste or waste material is material which is left over from cutting a board, rip or part which cannot or will not be used at a later point in time and which is discarded.

In addition to the factors described above, the machines which are used for processing the materials themselves may be subject to problems as well. The above described factors and problems are present regardless of the machines that are used for the cutting and processing of the materials. Manually entering dimensions or automatically configuring a machine with a layout does not reduce the time it takes to feed the machine or the time it takes for all the cuts to complete nor does it change wear or power consumption or the waste management. However, older machines such as those which have a control panel which is based on switches, levers and buttons and is not computerized may not be able to provide the same functions to an operator as a computerized machine. For instance, cutting using layouts requires certain processing capacities on the cutting machine which are typically not present in a non-computerized machine which has a start/stop button, buttons to enter dimensions and a few status lights and other control buttons. It would therefore be advantageous to be able to upgrade existing machines to support new control devices without significant investments in new machines or changes to the control systems of the existing machines. New control devices could either replace existing control panels for the machines or may interact with the machines in combination with or in addition to the existing control devices.
This shows that various problems exist with today's machines for cutting materials and devices for controlling such machines.

An objective of the present invention is to provide a control system for cutting materials which is able to reduce the time wherein all cuts are made. Another objective of the present invention is to reduce the amount of waste resulting from the cutting of materials and to facilitate the re-use of excess material. Another objective of the present invention is to enable existing devices to support the control system of the present invention and to enable existing devices to support other additional control functionality. Another objective of the invention is to cut the boards, rips and/or parts in such a way that further operations on the boards, rip and/or parts are possible and more accurate and that also assembling is taken into account.

### Summary of the Invention

The objectives of the present invention are realized by a system for controlling the cutting of a first rip out of a first board and a second rip out of the first board or out of a second board, the system comprising a control module,
**characterized in that** the control module comprises:
- means for providing an instruction to stack and/or align the first board and the second board or the first rip and the second rip; and
- means for providing an instruction to process the first board and the second board or the first rip and the second rip simultaneously.

Indeed, by stacking and/or aligning rips and processing these stacked and/or aligned rips simultaneously, it is possible to reduce the number of total cuts that are required to process one or more boards. A reduction in the amount of cuts means less wear on the machines or less power consumption and also reduces the amount of time needed to complete multiple boards or cutting layouts. Furthermore, the instructions can be given to an operator via a display screen or audible system, which means that devices used for cutting and processing do not need to contain the control module itself. Instead, it may be a separate computer or embedded device with a display or audio interface which instructs an operator on the various steps to execute. The instructions to the operator can take the form of graphical representations of the steps to take, a drawing of a cutting plan to be executed which may be a detailed plan or plan of the level currently being processed, via a video or multimedia animation, via a textual description of the actions, etc. However if the machine comprises the control module or is able to execute the control module as software instructions, the machine may be able to automatically stack and/or align and process the rips and boards. In the latter case, the instructions are for instance electrical signals sent from the control module to the machine executing the cutting, stacking or further processing. By providing instructions to the operator, the chance for mistakes such as stacking wrong boards or rips is reduced. A machine with automated stacking and/or aligning may even be able to completely avoid errors in stacking and/or aligning and simultaneous processing.

Stacking the boards or rips means that a number of rips or boards are placed on top of each other. However, cutting devices have certain constraints on the volume of material that can be placed in the machine for cutting. This means that a stack can only have a certain height. In order to increase the advantage of the present invention, it can therefore be beneficial to not only stack rips but also align rips next to each other. Rips or boards placed side-by-side in an aligned manner can be processed simultaneously. This way, it may be possible to increase the number of boards or rips that are cut or processed beyond the maximum height of the stack. For instance, if a cutting machine is able to cut a stack of five boards or rips high, it may be possible to align a second stack of five next to the first stack. This way, ten boards or rips can be processed or cut simultaneously.

The example given here is based on two identical layouts to be obtained from two boards illustrates how beneficial stacking boards can be. The present invention is however especially designed to process layouts wherein it is not mandatory that stacked rips or boards are completely identical in their further processing of the subsequent levels. The current level that is being cut, such as the first level which are the first rips obtained from a boards, is identical except where the non-identical section is waste. However, the second level may be different for each element obtained in the cutting of the first level. The current level does not even have to be identical, for instance waste may be present in one or more rips of the current level which are not present in all the rips of the current level.

The rips can be obtained from the same, first board or from different boards such as a first board and a second board. Different boards can be of the same material or may even be from a different type of material. Typically, the boards will be of the same material such as all wood or all metal but the characteristics of boards may vary such as thickness, kind of material, colour, etc. The present invention is independent from the type of material and the number of rips or boards that are stacked. However, by taking into account the dimensions of the machines used in cutting and processing boards and rips, it is possible to avoid stacks which are too high. This may however be resolved by both stacking and aligning stacks or boards or rips next to each other.

The simultaneous processing can be cutting, such as dividing rips into smaller pieces but may also include other processing such as drilling, milling, painting, grinding, adding masking tape to cover cut-off sides, etc. Simultaneous processing may also be an intermediate step in between two cuts. For instance, rips can be stacked, then adjusted in size using a milling machine and then be separated again because the next set of cuts for those two rips does not overlap. An alternative intermediate step could be the application of masking tape or edge banding on the sides before further cuts. The latter may for instance be advantageous in a scenario where the edges that have to be finished by edge banding are too narrow for the edge banding process. In such case, a part of a rip or an entire rip may undergo the edge banding processing before the parts are cut out of the rip. In other words, it is possible that the stacking or simultaneous processing of boards or rips is postponed until another operation has been completed. The other operation may be performed on a stack of boards or rips or may be performed on each rip or board independently. For instance, it is possible that two rips are cut into the same pieces but that one rip needs holes in certain pieces whereas the other rip does not require any drilling. In such case, it is possible to postpone the stacking and simultaneous cutting into parts until after the drilling of the holes in one of the rips.

The control module of the present invention provides instructions in order to improve the cutting sequence of rips and boards, reduce waste material. The present invention achieves this result by using a cutting device not in its automatic mode to cut complete boards according to the hierarchical level-by-level sequence. The present invention uses the cutting device in its manual modus but in an automated fashion (programming cut by cut). Having the ability of controlling the machine as if it was a manual machine provides the ability to cut anything in any desired sequence and by doing this in an automated fashion, the chances for errors are reduced significantly.

Optionally the control module in the system for controlling the cutting according to the present invention is further **characterized in that** the control module is adapted to provide the instruction to stack and/or align even if subsequent processing of parts of the first board and the second board and/or parts of the first rip and the second (level) rip are not identical.

The present invention may stack and/or align boards or rips if further processing at lower levels is not identical for all the boards or rips in the stack. If the current cutting level of stacking is also not identical, the non-identical part has to be waste or can be used to create later useable or frequently used components in order to enable stacking. A certain board may need to be cut in a series of rips forming the first level. Each rip of the first level is cut into parts forming a second level and the second level parts may be different and even requiring additional further cutting into subsequent levels. If only the first levels are identical, they can be cut together even if the subsequent levels are completely different. In other words, various boards can be cut into rips simultaneously whereas the parts of each of those rips may be different. If certain lower levels are identical, they can be stacked again for further processing.

It should be noted that the first level is considered as the current cutting level and any subsequent levels are created from the result of the first level or the current level. In summary, the present invention is able to process stacks of identical first levels regardless of how subsequent levels should be processed or even non-identical first levels if the non-identical parts are waste or can be used at a later time.

Optionally the system for controlling the cutting according to the present invention further comprises storage means.

Further optionally, the storage means of the system for controlling the cutting according to the present invention comprise:
- a storage for holding boards and/or rips;
- means for registering an addition to the storage or removal from the storage of at least one of the boards and/or rips;
- means for registering the location in the storage of the addition or the removal; and
- means for authorizing the addition or the removal.

Rips and boards can be stacked for further processing. When a board is divided into rips, a certain rip may not be used immediately because other rips with the same or similar further processing are not yet available.
The storage may be an automated storage system which is able to move the rip to an appropriate storage place. The storage can be an additional device which uses transport rolls or bands to move rips and boards to a storage location or a hedgehog storage which rotates into the correct storage spot for a particular piece. Alternatively the storage system may also be based on a number of storage places wherein a person manually places the rips. The complexity of the storage may depend on the goal of the storage and the need for any tracking of materials in the storage may also depend on the purpose of the stored material.

In order to temporarily store rips and/or parts which have to be further processed, a simple storage location may be sufficient such as a rack which can hold a number of rips or parts. An operator or an automated storage machine may be able to place rips or parts in the storage location until these rips or parts are needed for further processing without any need for complex tracking or authorization systems.

However, to ensure that the manual management of the storage of excess material which can be used at a later point in time is done without a risk of losing parts or rips, the storage system can be based upon an authorization and tracking system. The tracking system keeps track of which board, rip and part is stored at what location in the storage. This can be achieved by registering the board, rip or part and the location in storage where it is located or removed from. This way, there is a complete overview of which boards, rips and parts are where in the storage. The storage system can further contain an authorization system which is able to indicate whether a certain board, rip or part may be added to or removed from the storage via a visual, textual and/or audible signal. Especially when coupled to a system which plans the layouts and the use of excess in the execution of the layouts, this can lead to an increase in the use of excess material and thus in the reduction of the total amount of waste material that has to be disposed.

The identifying of the boards, rips and parts and the locations within the storage can be done using tags such as RFID tags, NFC tags, barcodes, alphanumeric identifiers, symbols, colours, etc. It is however advantageous to use identifiers which can be recognized using a scanner such as an RFID tag or a barcode. This way, an operator can scan the tag of a board, rip or part and the location and the tracking system is able to link that information together to know what is stored where. Similarly, such tags make it easy to determine whether a certain board, rip or part is reserved for cutting or processing or whether a certain board, rip or part is in fact excess and free for use.

An advantage of the authorization is that operators are able to find physically earlier excess material for new processing, for instance to replace a damaged rip or part. Another advantage is that by being able to track what is stored where and by having an authorization system, it is possible to have an exact overview of what is in storage. This way it is possible to instruct a user where a rip can be found which is to be stacked with one or more other rips. These instructions can also be sent to an automated storage system in order to store and retrieve boards, rips or parts. Due to the tracking and authorizing of additions and removals from the storage, it is possible to monitor the actions of a machine or operator. As a result, it is possible to reduce the amount of errors because a cutting device may be aware that a wrong board or rip is placed on the cutting machine and thus an error message can be given on a display or via an audible signal.

The storage means can also be used independently from the simultaneous processing of boards and rips. For instance in a wood processing facility where processing is done manually, it can be used by the employees to keep track of their parts and enable a higher use of excess material in order to reduce the waste.

Optionally the system for controlling the cutting according to the present invention further comprises a cutting device for cutting said first rip out of said first board and for cutting said second rip out of said second board, the cutting device having a control interface.

Optionally the system for controlling the cutting according to the present invention further comprises a conversion device, the conversion device comprising:
- means for receiving one or more instructions from the control module;
- means for providing the one or more instructions to the control interface of the cutting device.

Further optionally, the conversion device in the system for controlling the cutting according to the present invention further comprises means for converting the one or more instructions into one or more converted instructions, the one or more converted instructions being in a format interpretable by the cutting device and said means for providing the one or more instructions are adapted to provide the one or more converted instructions to the control interface of the cutting device.

A first way of enabling the present invention to operate with older and existing machines is by integrating the control module into an independent device which instructs an operator. A second way is by using a conversion device which translates instructions from the control module into converted instructions which can be executed by a cutting device.

Each cutting device has a specific format or syntax which defines how information is entered and how the machine is controlled. Some cutting machines have an advanced computerized input device which can process the layouts for boards and which can retrieve such layouts via a computer network or from a storage medium such as a floppy disc, optical storage device, Universal Serial Bus memory device, flash memory device, etc. Other cutting machines have a control panel with buttons that can be used to configure the machine or instruct the machine on which cuts are to be made. Regardless of the existing control device for the cutting devices, the conversion device of the present invention can be used to add functionality to the existing cutting devices.

The conversion device can be connected between the control interface of the cutting device and the control panel which initially was connected via that control interface to the cutting device such as the computer or PLC. The conversion device further also contains a connection for an additional controller such as the control module of the present invention or a computer or embedded device executing software which operates as the control module according to the present invention. In other words, the conversion device may act as a simple T-junction in the connection between the control panel and the control interface of a cutting device which enables the connection of another device to the control interface. The control module is able to send instructions to the conversion device, which in turn can convert the instructions from the control module into the protocol of the cutting device. For a new computerized system, this can result in a conversion into a file with instructions which is parsed by the cutting device or it's control system. For many existing cutting devices, it can result in a set of keyboard strokes or other key activations which are known to the cutting device or control panel and which result in the execution of the instructions. For a non-computerized system, the conversion can be into the same type of signals as those generated by the control device which is normally used to control the cutting device. Thus, the output from the conversion device is a number of signals which are the same as signals sent by the control panel of the cutting device normally manually entered by the operator.

The advantage of such a conversion module is that existing cutting machines are able to benefit from the benefits of stacking and simultaneously processing rips and boards. The existing machines do not need to be altered in a significant way because the conversion device may be used as an intermediate connector between the control interface of the cutting device and the controller of the cutting device.

It is however not mandatory that the conversion occurs in the conversion device. A part or all of the conversion may also be done by the control module of the present invention. For instance, the control module may be aware of various cutting devices and the protocol thereof. In such case, the control module may have an output which is already according to that protocol and thus processable by the cutting device. In that scenario, the conversion device is only a physical connection between the various devices.

The conversion device may also be used independently from a system which is aware of stacking and simultaneous processing of rips and boards. This way, existing cutting devices which are purely based on manual control by an operator via a control panel can be adapted to process complete layouts. The layouts are processed by an external device such as a computer which in turn provides instructions to the cutting device via the conversion device and to the operator via a display or audio system. Similarly, the conversion device can also be used to introduce a storage system in environments where boards, rips, parts or excess material are not tracked or not controlled by an authorization system in order to reduce the amount of waste. The conversion device may further also be used to extend the abilities of processing devices for other materials than wood. For instance, CNC machines, metal processing machines, drills, mills, etc.

Optionally, the system for controlling the cutting according to the present invention further comprises means for optimizing the cutting plan.

Further optionally in the system for controlling the cutting according to the present invention, the means for optimizing said cutting plan are adapted to alter the orientation of one or more rips and/or parts in a layout and the means are adapted to take into account the user preference of part orientation at cutting..

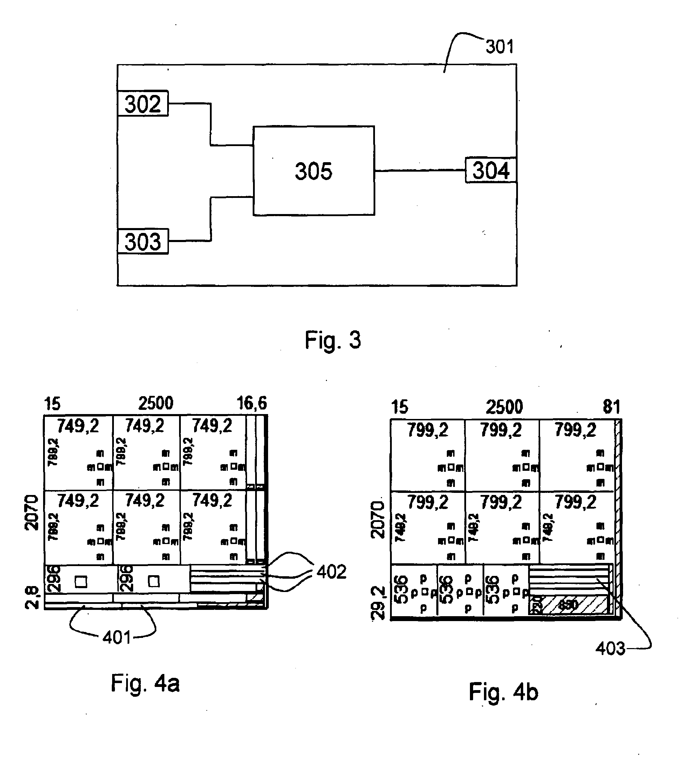

A way of optimization is by altering the orientation, possibly respecting the preferences of the user (based on knowledge of other machines parts processing) set at part data entry level, of rips and/or parts in the layout at a certain level or even the location and orientation of rips and/or parts in the layout. Cutting devices contain clamps which are used to hold boards, rips or parts into place while cutting the board or rip. When long and narrow rips are to be cut, it is difficult to position the long and narrow rip in the clamp correctly. The operator has for instance to position a rip of 2500mm x 50mm in the clamp. Positioning the 50mm side in the clamp while keeping the rip perpendicular to the saw direction over its entire length is difficult to achieve and may result in cuts under an angle which are not intended. This will further be explained with regards to Fig. 4a-4c.

The lowest level rip specifies which cut has to be cut last and thus on which cut the part or rip leaves the machine. The layout may also specify whether certain waste material should be left on a rip or part or not. This information can be contained in the layout or cutting plan, or may be entered by an operator during the cutting and processing of the material.

Furthermore the user may be able to specify, on a per part basis, the orientation on which the part needs to leave the machine or receives its last cut, the level and which sides should or should not be cut during the cutting process or which parts should be left together with waste or other parts in order to meet requirements of manufacturing purposes. The preferences of a user should be taken into account by the optimization means and the user preferences may override automatic optimizations.

Another form of optimization can be the ability to ignore certain cuts specified in the cutting plan on a certain level. For instance, a certain cut may be present in the cutting plan but may not be cut by the cutting device and be left for an operator or installer to be cut manually during assembly. This may also include the provisioning of some waste material in a cutting plan in order to have a clamping point available when cutting small parts which otherwise may be impossible to cut due to their size and the required sized for clamping.

Yet another form of optimization is changing the order of certain layouts. For instance, when the first cutting level of layouts 1, 2 and 4 is the same and the first cutting level of layouts 3 and 5 is the same, it can be beneficial to switch layouts 3 and 4 in place such that the first cutting level of boards 1, 2 and 4 can be cut simultaneously and that any further levels can be processed for as long as these levels are identical or similar. Then, boards 3 and 5 can be processed.

Optionally the means for optimizing in the system for controlling the cutting according to the present invention are adapted to generate one or more sub-sheets of parts for a multi-layer product, each of the sub-sheets being adapted to one of the layers.

The optimization can also take into account materials made up out of several layers. Typically such materials consists of two or three layers such as a hard-wood center layer and two finishing layers such as laminate. These layers are pressed and glued onto each other. The gluing and pressing can occur either before or after the parts have been cut from rips and boards. For instance in a scenario where the customer selects the same colour on the inside and the outside of a door panel, it is possible to glue the finishing layers to the hardwood before cutting the exact panel from the board or rip. However, still or when the inside and outside are of a different colour, it is common practice to cut each layer independently and then glue these together and press them. Applying a finishing layer requires a bit of spare material around the edges of the hardwood board and even more on the laminates. Cutting these individually means that each part is cut with the oversize and then each part is glued and pressed. This way there are three oversizes and thus three times a loss of finishing material per door. The optimization of the present invention may result in generating sub-sheets combining parts of the same material which can then be processed in order to reduce the loss of finishing material.

Various panels of the same or similar size can be grouped into a separate layout or sub-sheet. This sub-sheet indicates how a number of parts can be cut from a board or rip where each of these parts is for instance a door or drawer front. One sub-sheet is created for the hardwood parts and one double is created for the finishing layer on the top and the bottom. Then, the three layers which make up the sub-sheet can be combined via gluing and pressing in order to obtain a finished board from which the individual parts can be cut. This way there is only a single oversize needed of finishing material rather than loss per part.

Optionally the means for optimizing in the system for controlling the cutting according to the present invention may further comprise means for storing optimized cutting sequences.

The initial job can be optimized to cutting layouts according to the present invention. These optimizations result in a set of one or more cutting plans which can be executed by a cutting device or by an operator of the cutting device. The optimized cutting sequence also needs to be stored in a data format from which easily instructions can be derived which in turn can be processed by a cutting device or by the control device. These sequences are a listing of the sequence of cutting for a certain layout.

One example of storing the cutting sequence is in a tree structure which specifies the various steps of cutting one or more layouts based on a set of reference locations or coordinates and instructions such as jump to another part of the tree, cut, stop, store, etc. Each branch of the tree receives an identification ID which can be followed by instructions or flags that indicate what has to happen at that point in the tree. The flag may also indicate that another ID has to be taken together with the current ID in order to process parts simultaneously. The tree representation can be used to derive the exact instructions which are sent to the cutting device or the control module. For instance, when the control module of the present invention is coupled to the control interface of a cutting device via a conversion module, the control module can transmit instructions to the control interface via the conversion device where these instructions are created based on the tree level storage of the optimized cutting layout. Alternatives to a tree structure are XML files, propriety formatted data files, database tables, etc.

The present invention further relates to a method for cutting a first rip out of a first board and a second rip out of the first board or out of a second board,
characterized in that the method further comprises the steps of:
- stacking and/or aligning the first board and the second board or the first rip and the second rip; and
- simultaneously processing the first board and the second board or the first rip and the second rip.

Optionally, the method for cutting according to the present invention may further comprise the step of storing the first rip until cutting of at least said second rip out of the first board or the second board has occurred.

Optionally in the method for cutting according to the present invention, the first board and second board are may be out of one or more of the following:
- one or more kinds of wood and/or derivatives thereof;
- one or more kinds of metal and/or non-metal;
- one or more kinds of glass and/or derivatives thereof; and
- sheet material.

Optionally in the method for cutting according to the present invention, the stacking may be based on one or more of the following:
- acceptability of stacking rips out of different kinds of materials;
- acceptability of stacking rips with different further processing requirements;
- acceptability of sorting parts and rips within layouts;
- acceptability of reordering layouts;
- acceptability of unneeded rips;
- acceptability of optional rips and/or parts;
- acceptability of changing the parts orientation with the last cut;
- maximum stack height;
- maximum height and/or width of boards, rips or parts;
- maximum weight of boards, rips or parts;
- the maximum number of rips between the last rip added to a stack and the next rip to be added to the stack;
- the time delay between adding two rips to a stack; and
- the maximum number of cutting operations between adding two rips to a stack.

Although stacking and/or aligning of boards and rips with a similar or identical current cutting level has advantages, it may not always result in a desirable situation and may lead to long delays in further processing certain rips or even indefinitely postponing further processing of certain rips.

Certain kinds of materials may need different cutting settings than others. For instance certain kinds of wood may be more prone to splintering or scratching than other kinds of wood. It may therefore be beneficial to not stack those two kinds with each other. Other reasons why different kinds may not be stacked with each other is because the speed of the saw, power of the cutting device, etc. may be different for the materials. The stacking may therefore be determined by whether any rips or boards of different materials can be stacked or not or may be based on a list of which kinds can be stacked and which kinds cannot be stacked.

The cutting machines have limitations of ways wherein boards and rips can be clamped and aligned for cutting. It is important to avoid stacks which are higher than the openings of the cutting machine or which cannot be not clamped or cannot be supported by the cutting device.

To avoid postponing rips or boards for too long, a maximum timeframe defined by the maximum number of cutting operations can be set wherein rips have to be processed. Such a timeframe may take other conditions into account such as maximum stack size. There is no point in keeping a stack until the timeframe has lapsed when the current stack size is already the maximum allowable stack size.

Similar to a timeframe, there may also be a maximum number of rips or boards that can be between two boards or rips to stack these boards or rips for cutting.

It is possible that two rips from the same or different boards have partially the same layout. For instance one is cut into four equal pieces and the other is cut in two of those pieces and the remainder is excess material. In certain conditions, it can be acceptable to cut both rips into those four equal pieces simultaneously which leads to two parts which are not needed according to the layout. Such unneeded pieces can be acceptable for various reasons such as to keep a stock of replacement parts for repairs or because those pieces can be used for further cutting or processing.

### Brief Description of the Drawings

Fig. 1 illustrates a layout for cutting a board into rips and parts;
Fig. 2 illustrates an overview of a scenario wherein an embodiment of the present invention is used;
Fig. 3 illustrates a view of an embodiment of a conversion device according to the present invention;
Fig. 4a - 4c illustrate the steps in an embodiment of the present invention wherein the layout is optimized;
Fig. 5a and 5b illustrate a number of layouts wherein certain rips can be stacked; and
Fig. 6 illustrates the advantage of combining layouts according to the present invention.

### Detailed Description of Embodiment(s)

Fig. 1 shows a cutting plan of a board of 4500mm wide and 3000mm high out of a material such as wood, metal or glass and the layout of the parts in which the board has to be divided. Fig. 1 does not take into account the thickness of the saw blade or the width of a cut while cutting the board. This means that in a real scenario, it would be impossible to divide a board of 3000mm high into three rips of 1000mm high as the thickness of the saw blade would create a cut of for instance 3mm wide. However this is irrelevant to illustrating existing solutions and the advantages of the present invention as was done above.

Fig. 2 illustrates a scenario wherein an embodiment of the system of the present invention is used. It illustrates a cutting device 201 such as a machine for cutting wooden boards and rips using a fast spinning saw blade. The cutting device 201 has a control panel 202 which is coupled to the control interface 208 of cutting device 201 via a conversion device 203. In this particular example, the conversion device 203 is placed in the cable which used to connect the control interface 208 of cutting device 201 with the control panel 202 directly as a controlled T-junction. The conversion device 203 is furthermore coupled to a computer 204 which executes an embodiment of the control module of the present invention as a software program. The conversion device 203 and an embodiment of such a conversion device will be described below with respect to Fig. 3. The computer 204 is coupled to an input device such as keyboard 205 and an output device such as display 206. Fig. 2 further also shows a storage 207 whereon boards and rips can be stored and the operation of which can be controlled by the computer 204. The computer 204 may be coupled to the storage 207 via a direct link or the computer may be coupled to the storage 207 via an intermediate device such as conversion module 203 or cutting device 201. The latter may be particularly the case when the storage 207 is part of the cutting device 201.

The control panel 202 can be a basic control panel with a start/stop button, an emergency stop button, status lights indicating whether the machine is powered on, stand-by, active or that an error has occurred, an alphanumeric keypad to configure a certain layout for a board and controls for adjusting device settings such as saw speed, position of the blade, etc. The control panel 202 also allows an operator to define how a board or rip has to be cut manually. Any key-press on control panel 202 results in a specific signal that is transmitted to the control interface 208 of cutting device 201. The control panel 202 may however also be a regular keyboard and mouse which are well known in the art or may be a computerized control panel based on a Programmable Logic Controller (PLC), personal computer, etc.

The computer 204 is in this particular example a personal computer which has a number of software application installed thereon and which is able to execute the software applications and their instructions in order to control the cutting device 201 as if operated by control panel 202. A first software application is an application which is able to analyse one or more layouts and send the appropriate instructions to the cutting device 201. A second simultaneously executed software application is an application which instructs the operator on how the layout has to be executed which includes instructions to feed boards and rips into the device 201, retrieve rips and parts from the device 201, stack boards or rips, move boards, rips or parts to storage 207 or retrieve items from storage 207, etc. A third optional application is a storage management application which is able to track the items such as boards, rips and parts that are added to or removed from the storage 207 and which is able to authorize additions and removals. Although not shown in Fig. 2, the computer 204 may also be coupled to a printer which delivers tags that can be placed on the boards, rips and parts for easier storage management.

The computer 204 presents the instructions via display 206 to the user in a graphical or textual way. The computer may further also be coupled to an audio system to provide audible instructions or warnings to the user. The computer may also be coupled to one or more additional displays or light systems to signal the user. For instance, a bar with a red, an orange and a green light may be positioned visible to the operator, for instance near the computer 204 or near the storage 207. The light system is used to indicate whether an action is performed correctly using for instance the green light, whether an action is performed wrong using for instance the red light or whether some error has occurred using for instance the orange light. Of course other colours and uses of lights are also possible. For instance the orange light may be omitted and a red steady burning light can indicate the wrong performance of an action whereas a flashing red light with or without an audible signal may indicate an error. The lights or other additional displays can also be used to notify a user that it is allowed or not allowed to remove a certain item from the storage or add a certain item to the storage at a certain location.

The keyboard 205 enables a user to provide input to the computer 204. Such input can be an instruction to move to the next step in cutting the layout because a certain part has been completed, look ahead to the next few steps in order to know what is coming up, etc. These instructions may however also be received by computer 204 from control panel 202 via the conversion device 203. The keyboard 205 can also be used to load a new layout or change a layout. The computer 204 can feature other input devices as an alternative for or in addition to keyboard 205. Other input devices such as a mouse or a dedicated control panel can be connected to the computer 204 and used to instruct the computer 204 and control the applications executed thereon.

During the processing of the materials, an operator may need to temporarily store one or more boards, rips or parts. The operator can store these items in storage 207. The storage 207 is in this particular example made up out of a number of shelves, vertical seperations or an automated stacking system. The orientation of the seperations is less relevant. In order to facilitate the tracking and management of the stock and the items in the storage 207, the locations may have an identifier such as a bar code or an RFID tag attached thereto. These tags, in combination with tags or identifiers placed on the items, allow for an easy tracking of items and their allocation in the storage 207.

The storage management application on computer 204 may be coupled to a scanner which can retrieve the identifications from the tags on the shelves and items. This way, the computer 204 can determine which parts are currently needed for processing and which parts the operator intends to use or retrieve for processing. If these two match, the computer can indicate to the user that the use is acceptable, otherwise the computer 204 may signal to the user that an item is not acceptable or allowable for a certain action. The storage management application on computer 204 may further also be able to control the storage 207 when the storage is an automated storage system such as a hedgehog storage or an automated multi-level stacking device. The storage management application can ensure that the appropriate storage location is presented to a user when adding or removing parts from the storage 207.

It is noted that the storage management with visible indicators such as lights or a display screen and/or an audible signal may be used indepently from the system of the present invention. In particular, the visible indicators may also be used to merely track stock of materials in a warehouse and notify users if selected materials may be taken out of storage or not.

It should be noted that as an alternative to having a separate computer 204 which is connected via a conversion module to a cutting device 201, it is also possible to directly connect the computer 204 to the cutting device 201 via the control interface 208 of the cutting device 201. In other words, the computer 204 may also replace the existing control panel 202 for a cutting device. Alternatively, the cutting device 201 may contain a computer system which is able to execute the software of the computer 204. In such case, the cutting device 201 itself may be able to implement embodiments of the present invention. The control panel 202 is another alternative whereon an embodiment of the present invention may be executed. In general, it is irrelevant where an embodiment of the present invention is executed. Every existing setups has advantages. Connecting a computer to an older device via a conversion module extends the abilities of the existing device whereas integrating embodiments of the present invention into cutting devices or control panels reduces the need for additional hardware.

Fig. 3 illustrates a block diagram of a conversion device 301 which for instance can be used as conversion device 203 in Fig. 2. The conversion device 301 in this particular embodiment consists of two input connectors 302 and 303, an output connector 304 and a processing module 305 which interconnects the input connectors 302 and 303 to the output connector 304.

In a basic embodiment of the conversion device 301, the processing module 305 can be made up out of a buffer wherein input from either inputs 302 and 303 is stored until the input is sent to the output 304. The conversion device 301 may also contain an external switch to select on one of the inputs 302 and 303 and then the conversion device 301 accepts data from that input. However, it is beneficial to have a conversion device wherein both inputs 302 and 303 are equally and wherein signals can be sent on both inputs 302 and 303 simultaneously or sequentially. Such a basic version can be used for instance in systems where the devices connected to the conversion module are able to send data in the appropriate format for the device connected to the output 304.

In an alternative embodiment, the conversion device may contain a number of external buttons or switches which can be used to send instructions to the cutting device. These buttons or switches may be similar to buttons and switches found on the control panel of a cutting device such as a button to move on to the next step in a sequence, to stop the process, etc.

Of course, it should be taken into account that certain commands may need a priority over other commands or instructions. For instance, a press on the emergency stop button should be accepted by the cutting device over any other instruction from any other control device or control module. This can be achieved by having a processor in the conversion device 301 which is able to detect the input signal and transmit the signals of the highest priority to the cutting device first. Alternatively, any signal from the inputs 302 and 303 may be relayed to the output 304 and the cutting machine is able to prioritize certain instructions over other instructions.

In a more advanced embodiment of the conversion device 301, the processing module 305 can contain a processor and a memory with instructions for the processor or a microcontroller with instructions embedded thereon. The instructions for the processor or microcontroller can be used to convert instructions received via either input 302 or 303 into a format or syntax that can be processed by the device connected to the output 304. For instance, the instructions obtained from a cutting device controller may be to cut a rip in three pieces of different sizes and may specify those sizes. The conversion module can convert this into absolute or relative coordinates for each cut and provide these positions to the device connected to output 304. The conversion device 301 may also be able to provide feedback to another input in which case inputs 302 and 303 can be considered as two-way interfaces. For instance, if a user presses the button to move on to the next step in the cutting plan on control device 202 of Fig. 2, the conversion device may also send a signal to the computer 204 informing the computer of the desire to move on to the next step.

The instructions to be executed by the processor or microcontroller can either define how the conversions are done, for instance by extracting the measurements from a cut instruction or the instructions may be linked to a conversion table wherein an instruction in one format is listed together with the same instruction in another format or syntax. In general, the processor or microcontroller are able to analyse an incoming instruction and send out a corresponding instruction that can be executed by the device connected to the output 304.

Both the inputs 302 and 303 can be made up out of various kinds of connectors. The inputs may be of the same kind of connector or may be of a different kind of connector. For instance, the input 302 can be of a type which is used to connect a control panel to a cutting device whereas input 303 can be of a more generic type that is supported by various computers such as an Universal Serial Bus connector, a Serial line connector, a Firewire or IEEE 1394 connector, an RJ-45 or an RJ-11 connector, etc. Alternatively, the connector may also be a keyboard and/or mouse connector, in order to connect an external keyboard and/or mouse to a cutting device. The connectors may also be made up out of two parts, one part which is fixed to the housing of the conversion device 301 and one part which can be removed from the conversion device 301. This way it is possible to change the physical connectors available on the conversion device 301 by replacing the removable part by another type. For instance, the part connected to the housing may be made up out of a proprietary connector and the removable part may feature the same proprietary connector on one side and an USB connector on the other side. A second removable part may feature the proprietary connector on one side and an IEEE 1394 connector on the other side. This way, it is possible to have both an USB connector or an IEEE 1394 connector without needing an additional conversion device or a different conversion device. Changeable connectors may however need support in the processing module 305 and the removable parts may need some internal electronics to adapt signal levels from various specifications to a uniform signal level that is used within the conversion device. Of course, a similar approach can also be used on the output connector.

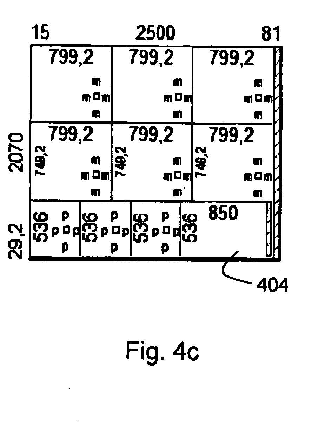

Fig. 4a illustrates the initial cutting plan or layout for a board of 2500mm wide and 2070mm high. The layout consists of several rips which are further divided into several pieces. However, the layout as shown in Fig. 4a is not optimal. In particular, the rip from which the pieces indicated by 401 are to be cut is narrow and the final cut of that rip into the individual parts 401 is difficult to cut because the narrow side of the rip with parts 401 has to be placed into the clamps of the cutting device. The layout of Fig. 4a however has three more pieces at 402 which are the same as the two pieces at 401. The small rips in 401 can be left without doing the second level cuts. Reoptimization, having the user specifying parts cutting orientation for those parts as having them as last side to be cut the long side. The more optimal layout is shown in Fig. 4b wherein the five equal pieces are grouped at 403. In 403, all of the similar pieces with a narrow width are placed below each other. If the boards with these five parts is cut from the rip of 536 wide, the final cut of that part into the five pieces is along the long side of the pieces. In other words, the orientation of the final cut for pieces 401 from 4a is altered into an orientation which is more convenient to cut, the longest side. The waste at the bottom of 403 is needed in order to clamp the part in the cutting device to obtain the five narrow strips. The more optimal layout can also be split as far as the cutting sequence is concerned as shown in Fig. 4c wherein a large part 404 is cut from the last rip of the board. The large part 404 can then be re-cut as shown as 403 in Fig. 4b after the application of edge banding on the block 404 left and right. Of course such optimization may result in rips or pieces which can no longer be obtained from the same board. However, it may be possible to move certain pieces to other boards in order to obtain all required pieces when all layouts are cut with the use of more or less material.

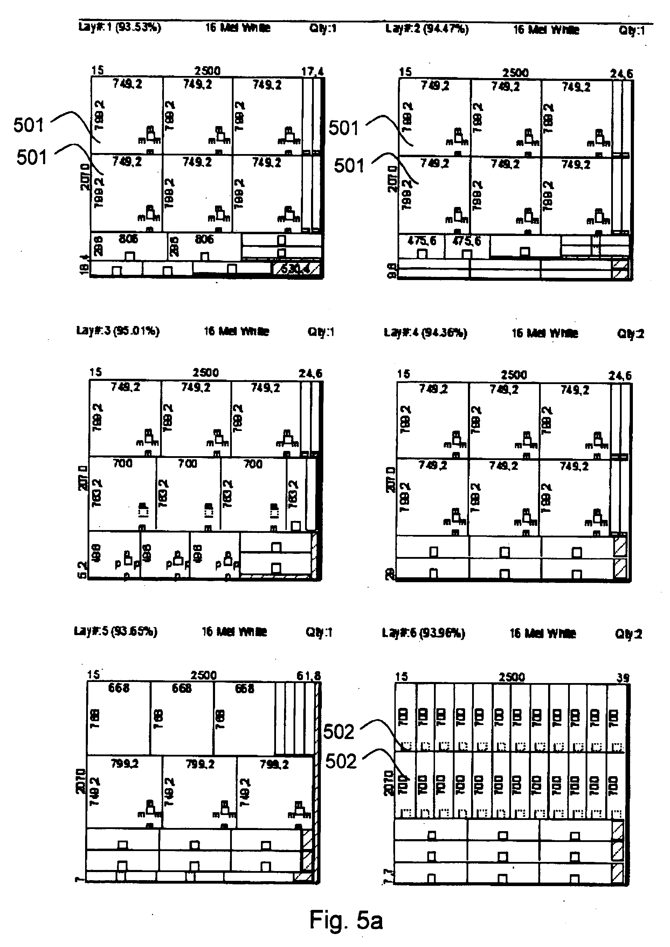

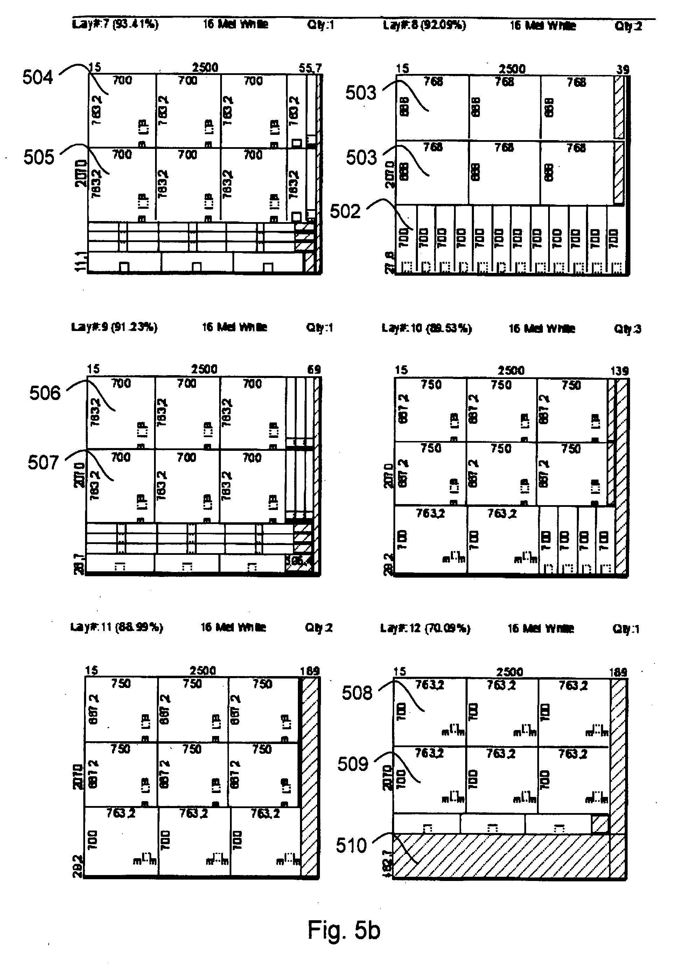

Fig. 5a and 5b show a number of layouts which have to be cut in order to build the cupboards for a kitchen. Each individual layout is characterized by a number of parameters which are shown above the layout. For instance, the first layout is characterized by "Lay#: 1(93.53%) 16 Mel White Qty: 1". The Lay#: *1* represents the number of the layout which in this particular case is 1. The percentage indicated after the layout number between brackets is the amount of the board that is used. In this particular example, 93.53% of the board is used and only 6.47% is waste material which can be discarded. The waste material is indicated on the layout via a hashing. *16 Mel White* is an identification of the type of material from which the layout has to be cut. In this particular, the layout is cut from a board with a thickness of 16mm and a White Melamin colour. The *Qty: 1* indicates the quantity of the board or in other words the amount of times a particular pattern is needed. Each of the other layouts has similar markings to indicate their number, the percentage of board used, the material and the number of boards. Furthermore, on each layout, the numbers indicate the length of a side of a part, rip or board in millimetres. For instance the first layout is cut from a board with a total dimension of 2070mm x 2500mm. Within certain parts of the layouts shown in Fig. 5a and 5b, a small square is shown with one or more letters around it. The square represents the part itself and the letters indicate which type of finishing or edge banding that is required on that side of the part. For instance an 'm' indicates melamin and a 'p' indicates a PVC edge. Similar markings are used in Fig. 1, Fig. 4a - 4c to indicate the size of the boards, rips or parts.

Layouts 1 and 2 both contain two rips 501 from which three pieces of 749,2mm x 799,2 mm have to be cut. Since both layouts are cut from the same kind of boards, *16 Mel White* or even when cut from different kinds of boards, it is possible to stack these boards even if certain restrictions apply such as no stacking of boards or rips of different materials or with a different thickness. By stacking all the rips 501 from layout 1 and layout 2, it is possible to cut the four rips 501 into the respective smaller parts simultaneously. This means that they are cut as one stack rather than rip by rip.

Another example can be found when looking at layouts 6 and 8. Layout 6 contains two rips 502 which are to be cut into twelve equal pieces and layout 8 contains a single rip 502 which is to be cut into the same twelve equal pieces. It is thus possible to retain the rips 502 from layout 6 in a storage until the rip 502 from layout 8 has been cut and then those three rips 502 can be stacked before they are cut into the twelve equal pieces simultaneously. Layouts 6 and 8 each have to be cut twice, it is therefore possible to stack even more rips up to a total of six rips if the cutting machine can handle a stack of that size otherwise several stacks may be aligned next to each other. Cutting the rip 502 from layout 6 into twelve identical pieces takes 11 cuts. Doing this for layout 6 together with the rip 502 from layout 8 does not generate an additional cuts. In other words, a single cycle of 11 cuts is sufficient to obtain all the pieces. If the maximum stack size would be four rips, then no advantage can be obtained unless aligning multiple stacks next to each other is allowed.

When looking at the other layouts in Fig. 5a and Fig. 5b, it is possible to spot other rips that can be stacked such as in layout 10 and layout 11. If the maximum stack height is five boards, both layouts 10 and 11 can be stacked to the total of five boards. All first rip widths are the same (667,2mm and 667,2mm and 700mm) and the two first rips 504 are cut together and the last rips 505 and 506 are cut independently which means that except for one rip cutting, the two stacks are cut as one stack.

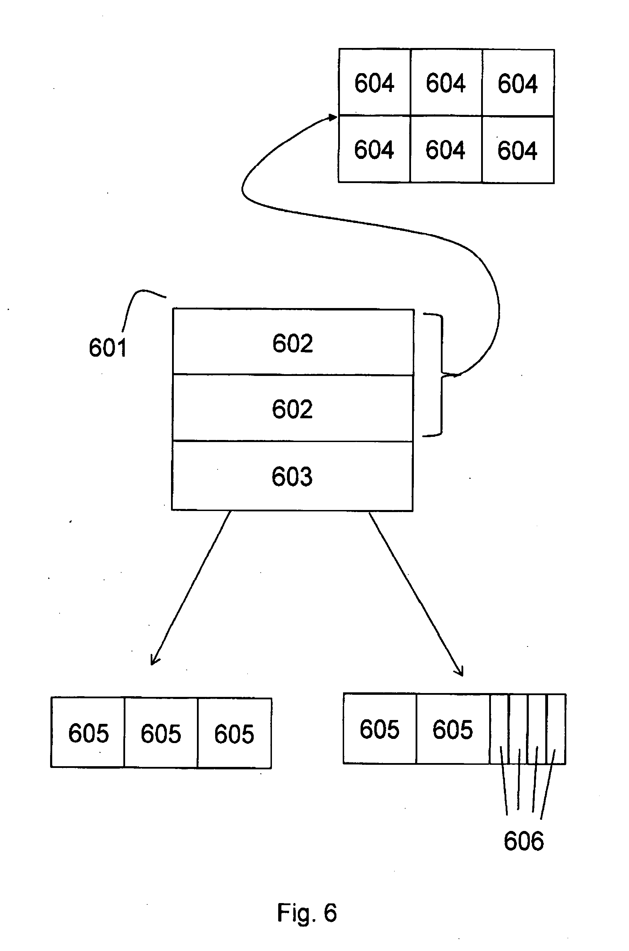

Fig. 6 illustrates the cutting of layouts 10 which is needed three times and 11 which is needed two times in more detail wherein 601 is a representation of the first level cuts that are cut from a stack of 5 boards. In the first level cut, two rips of equal width (667;2mm) are shown as 602 and the third rip is of different width (700mm) and is shown as 603. The rips of equal size can then be further cut into the smaller pieces 604 (750mm) as two stacks of 5 rips high which are aligned next to each other and cut simultaneously. The third rip of layout 10 and layout 11 cannot be combined for cutting as their last level cuts are different. This means that a stack of three rips 603 is cut into parts 605 as defined by layout 10 and the remaining stack two rips 603 is cut into parts 605 and 606. When both layouts are cut independently, it would require 29 cut cycles to obtain the result. However, by combining layouts 10 and 11 as described above, this can be reduced to 20 cut cycles or a reduction of about 30%.

The present invention however also allows other forms of stacking and optimization of the layouts. For instance, layouts 7 and 9 are nearly identical. The top two rips 504 and 505 of layout 7 are equal to each other and the top two rips 506 and 507 of layout 9 are equal to each other. Because the top two rips of layouts 7 504 and 505 and 9 506 and 507 have the same width, it is possible to interchange rips between layout 7 and 9. In this particular example, the cutting of layouts 7 and 9 can be optimized by placing the second rip 507 of layout 9 in the place of the first rip 504 of layout 7 and vice versa. This way, layout 7 and layout 9 are identical and the boards can be stacked from the start.

Another example is to combine layouts 7, 9 and 12. By rotating the parts of the top two rips 508 and 509 of layout 12, these rips become identical to the top two rips of layouts 7 504 and 505 and of layout 9 506 and 507 without the small parts at the end of each rip. If layout 12 is then cut according to layout 7 or 9, which can be optimized as described above or not, some excess small parts are created. However, it may be acceptable that such parts are discarded in which case layouts 7, 9 and 12 can be combined. This example illustrates that even the current cutting level does not have to be identical when waste 510is available. The subsequent levels are not identical either, but layout 12 has waste which can be turned into excess parts. The subsequent levels of layouts 7, 9 and 12 can thus be processed simultaneously.

The cutting plans as shown in Fig. 5a and 5b can be stored in a graphical representation, similar to the representation which is shown in the figures. Such a graphical representation can be used either for the initial cutting layout or for an optimized cutting layout. However, processing of graphical layouts is difficult to achieve and therefore an alphanumerical storage of the layout may be preferred. Such an alphanumeric storage is a representation of the layouts as a series of numerical values and commands or instructions. For instance, a board of 3000mm x 4500mm can be drawn or can be stored as a node in a tree with a length and a width value. Such a node may have one or more sub-nodes which represents the rips to be cut from the board, each having a length and a width. Similarly, each node or sub-node may also contain one or more commands. Such a command can be cut, store, stack, etc but may also be a jump to another node, sub-node or command. The sub-nodes may themselves also contain a number of sub-nodes which make up the parts of the rip. In summary, a tree representation can be made of a board with rips and parts. Stacking may be more convenient by jumping from one rip to another rip via a jump command in order to obtain both rips without waiting for other rips that are in between the two rips.

An alternative to the tree structure is the of data files such as XML files wherein each board is defined by a set of tags with the dimensions and characteristics as parameters of that tag. A rip is also defined as a set of parameters with characteristics and dimensions set as parameters of the tags and also the parts can be stored similarly. The part tags can be nested within rip tags, which in turn can be nested within board tags. The advantages of such a structured storage is that it is easier to process for computing devices or processor which is in control of a cutting device. In particular, storing the optimized layout in such a format enables the generation and transmission of instructions to the cutting device or its control interface as if these instructions were entered manually by a user of the system via a dedicated control panel.

### Intelligent Cutting:

Cutting machines always handle patterns in a three structure way, level by level, with the exception of ab ba cutting. If you have several books (stacks) of the same layout, then for each even book the rip sequence is inverted so that the last rip(s) from a previous book can be cut, for the second level, together with the first of the current book. This is only applied in automatic angular beam saws (2 axis) where books are mirrored so that the last rips from a book can be cut together with the first rips of the next book or small rips are kept aside in 1 buffer to be then cut all together.
A) Cutting method.
   Methodology consisting of techniques in order to cut per cutting pass as much layers of material as possible in order to reduce the total number of cuts and so maximize machine cutting output. Applicable on mono cutting line machines, multi cutting line machines and machine combinations. The methodology optionally also looks to meet specific individual parts orientation cutting sequence and multi material combinations ex. (Laminated products).
   1) Some notes how it could be selected in the software later on. Full Pattern joining :
      a. Allow stacking of patterns of different materials. Yes/No
      b. Allow stacking of patterns only when all level 1 cuts widths are the same. Y/
         No=Allow stacking of patterns with different section (block) of :
         1. A number of different rips
         2. A total number of rips
         2. A distance of different rips
         3. A weight of the different section

            With or without control of machine unloading stacking locations.
            If on a level rips are cut together but if different in next level, then for the next cutting phase (re-cutting), rips need to be de-stacked. + (re)sorting of levels and layouts
            Second level Rip joining
      c. Allow rips to be cut together or up to x patterns away (rip distance). Any rip which occurs in a pattern can wait until an equal rip comes. A limit to waiting rips is set depending user acceptance and on available locations.
         Lower level Rip joining.
      d. Join re-cuts (level 3 to level n) within the same sheet pattern or between different sheet patterns.
   2) Cutting patterns where some rips simply do not occur. If a sheet full of parts is needed and an extra sheet is needed with the same sizes but les, then it may be allowed to cut sheets together and so having too many parts. In this way an extra cutting cycle is avoided.
      On the above handling criteria need to be added:
      Efficiency optimization taking into account the time it needs for 'inter cutting' storage.
      Numerical limitation table
      Level 0= pattern 1= first cutting direction, 2= cross-cut of rip, 3=re-cut,
      4=tum & cut. 5=...
      m)inimum M)aximum
      m M Level / Max dist /mKg/MKg / minL / minW/ Max L / MaxW / Machine
      F From /ex. in patterns / / / / /
      Some re-cuts or operations may be combined with the use of another saw, linked or not, for this purpose user can select machine.
B) Rip temporary storage:
   Rips which are not immediately cut in sequence with the others in order to be cut with upcoming ones need to be stored in an efficient, not time consuming, for storage and retrieval, way. Several approaches are here applicable:
   -) Level storage, horizontal panel/rip storage, fixed or moving.
   -) Angle storage, vertical or in a light angle panel/rip storage.
   -) Horizontal storage with manual or x/y positioning or a combination
   -) Vertical 'Hedgehog' storage. //////
   These locations may be stationary, signaled or not , or moving, presenting the to be used location to the operator.
C) Temporary Formats
   Based on experience of consumption, leftovers also called off-cuts, may be stored. Each left over gets an identification when cut. The operator stores the part on a location with a location identification. The combination of both identify the Temporary format's location. This allows the I.C. system to instruct the operator where to find the T.F.. If for any other purpose a T.F. is needed for a different or other job, a database management based system will notify the user of the T.F. if it was planned (reserved) for a job or not. This notification together with miss use signals will be done over colored light signals or different sound messages.
D) Inkey
   Module to allow the above on existing or not prepared for machines without having to modify anything on the programming of the (existing) machine. Any cutting machine with at least 1 positioning CNC axis has a way to program 1 cut or a sequence of cuts, so called manual mode. This is the modus that the In Key module wants to use in order to achieve the above on existing and new post equip able machines. In stead of having to follow the machines cutting method for programmable patterns, the user can, with this solution cut anything without any complexity limitation. The method and logic of cutting comes from the new software environment, the existing machine logic is denied by using he machines 'manual' method. Inkey modules allows the Intelligent Cutting software to program (instruction input) the old machine over the 'user' interface, keyboard and mouse. The Intelligent cutting program's post processor generates the data input (keyboard, mouse or other input devices like keypad's and function key's), the Inkey module converts the data to physical signals of the corresponding devices and may so be for each device parallel connected.
   This Inkey interface module may also be used for other data entry between systems with similar hardware set-up.
E) Sheet Optimisation (nesting) software and techniques that specifically optimize and look for the achievement of such patterns for structured cutting. Also such method can optionally respect parts depended cutting and cutting orientation.
F) Parts depended cutting: user can specify per part the orientation Length or Width on which the part needs to leave the machine (receive the last cut), the level and which side should not be cut during the first cutting process or left together with scrap, rest or other parts to meet a minimum size for manufacturing purposes (ex. Edge or other profile operations).
G) Data storage, based on a tree or level structure with on each branch a knot ID. This ID may be followed by a stop flag or an execution flag followed by other ID's referring to these rips to be jointly cut. Or any data structure that allows the same operation.
H) Parts cutting process for material - combined parts, ex. Laminated products. The intelligent cutting system gets or detects these parts as 2 or 3 elements, entered as 1 part with several properties or as 3 elements with a common ID. First the most expensive element, mostly top layer, is optimized for all parts that also have the same bottom or backing material. Based on this grouping 'sub-sheets' are created. Then these sub-sheets are doubled for the bottom element. By this all sub-elements for top and bottom layer of parts is created with just oversize on the edge an not an oversize for each individual part. Next step is optimizing the 'sub-sheets' with size reduction from the structural, central material with smaller oversize. Top - central material - Bottom material are then assembled (glued pressed or not). The intelligent cutting system produces for each sub-sheet a standalone cutting pattern or a pattern set (linked). These can then also be linked using the intelligent stacked sequence cutting.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", and the like, when used in the description or in the claims are introduced to distinguish between similar elements or steps and are not necessarily describing a sequential or chronological order. It is to be understood that the terms so used are interchangeable under appropriate circumstances and embodiments of the invention are capable of operating according to the present invention in other sequences, or in orientations different from the one(s) described or illustrated above.

## Claims

1. A system for controlling the cutting of a first rip out of a first board and a second rip out of said first board or out of a second board, said system comprising a control module,
**characterized in that** said control module comprises:
- means for providing an instruction to stack and/or align said first board and said second board or said first rip and said second rip; and
- means for providing an instruction to process said first board and said second board or said first rip and said second rip simultaneously.

2. The system for controlling the cutting as defined in claim 1, further **characterized in that** said control module is adapted to provide said instruction to stack and/or align even if subsequent processing of said first board and said second board and/or subsequent processing of said first rip and said second rip are not identical.

3. The system for controlling the cutting as defined in claim 1, further **characterized in that** said system comprises storage means.

4. The system for controlling the cutting as defined in claim 3, further **characterized in that** said storage means comprise:
- a storage for holding boards and/or rips;
- means for registering an addition to said storage or removal from said storage of at least one of said boards and/or rips;
- means for registering the location in said storage of said addition or said removal; and
- means for authorizing said addition or said removal.

5. The system for controlling the cutting as defined in claim 1, further **characterized in that** said system comprises a cutting device for cutting said first rip out of said first board and for cutting said second rip out of said second board, said cutting device having a control interface.

6. The system for controlling the cutting as defined in claim 5, further **characterized in that** said system comprises a conversion device, said conversion device comprising:
- means for receiving one or more instructions from said control module;
- and
- means for providing said one or more Instructions to said control interface of said cutting device.

7. The system for controlling the cutting as defined in claim 6, further **characterized in that** said system comprises means for converting said one or more instructions into one or more converted instructions, said one or more converted instructions being in a format interpretable by said cutting device and said means for providing said one or more instructions are adapted for providing said converted instructions to said control interface.

8. The system for controlling the cutting as defined in claim 1, further **characterized in that** said system comprises means for optimizing said cutting plan.

9. The system for controlling the cutting as defined in claim 8, further **characterized in that** said means for optimizing said cutting plan are adapted to alter the orientation of one or more rips and/or parts in a layout and said means are adapted to take into account the user preference of part orientation at cutting.

10. The system for controlling the cutting as defined in claim 8, further **characterized in that** said means for optimizing are adapted to generate one or more sub-sheets of parts for a multi-layer product, each of said sub-sheets being adapted to one of said layers.

11. The system for controlling the cutting as defined in claim 8, further **characterized in that** said means for optimizing comprise means for storing optimized cutting sequences.

12. A method for cutting a first rip out of a first board and a second rip out of said first board or out of a second board,
**characterized in that** said method further comprises the steps of:
- stacking and/or aligning said first board and said second board or said first rip and said second rip; and
- simultaneously processing said first board and said second board or said first rip and said second rip.

13. The method for cutting as defined in claim 12, further **characterized in that** said method comprises the step of storing said first rip until cutting of at least said second rip out of said first board or out of said second board has occurred.

14. The method for cutting as defined in claim 12, further **characterized in that** said first board and second board are made out of one or more of the following:
- one or more kinds of wood and/or derivatives thereof;
- one or more kinds of metal and/or non-metal; and
- one or more kinds of glass and/or derivatives thereof.

15. The method for cutting as defined in claim 12, further **characterized in that** said stacking and/or aligning is based on one or more of the following:
- acceptability of stacking and/or aligning rips out of different kinds of materials;
- acceptability of stacking rips and/or aligning with different further processing requirements;
- acceptability of sorting parts and rips within layouts;
- acceptability of reordering layouts;
- acceptability of unneeded rips;
- acceptability of optional rips and/or parts;
- acceptability of changing the parts orientation with the last cut;
- maximum stack height;
- maximum height and/or width of boards, rips or parts;
- maximum weight of boards, rips or parts;
- the maximum number of rips between the last rip added to a stack and the next rip to be added to the stack;
- the time delay between adding two rips to a stack; and
- the maximum number of cutting operations between adding two rips to a stack.
